# FASCICULE DE BREVET EUROPEEN

(11) **EP 3 752 723 B1**
(45) Date de publication et mention de la délivrance du brevet: **22.01.2025**
(21) Numéro de dépôt: 19718777.6
(22) Date de dépôt: 15.03.2019
(51) Int. Cl.: F01P 5/04, B60K 11/04, F01P 7/16

(54) **MODULE DE REFROIDISSEMENT POUR VÉHICULE AUTOMOBILE**
KÜHLMODUL FÜR EIN KRAFTFAHRZEUG
COOLING MODULE FOR A MOTOR VEHICLE

(30) Priorité: 16.03.2018 FR 1852280
(43) Date de publication de la demande: 23.12.2020
(73) Titulaire: Valeo Systemes Thermiques-THS, 78322 Le Mesnil Saint Denis Cedex (FR)
(72) Inventeur: BERNARD, Jean-Sylvain, 78320 LE MESNIL SAINT-DENIS (FR); BIREAUD, Fabien, 78322 LE MESNIL SAINT-DENIS CEDEX (FR); GESSIER, Bertrand, 78322 LE MESNIL SAINT DENIS CEDEX (FR); BEHAREL, Rémi, 78322 LE MESNIL SAINT DENIS CEDEX (FR); ROMANET, Lydia, 78322 LE MESNIL SAINT DENIS CEDEX (FR)
(74) Mandataire: Valeo Systèmes Thermiques
(86) Numéro de dépôt international: PCT/FR2019/050593
(87) Numéro de publication internationale: WO 2019/175519

(56) Documents cités:
- EP-A1- 2 875 979
- EP-A2- 0 323 210
- JP-A- 2014 189 077
- JP-A- 2015 001 155
- US-A1- 2015 240 700

## Description

La présente invention concerne un système de refroidissement pour véhicule automobile.

L'invention trouve une application privilégiée, mais non exclusive, dans le domaine des véhicules automobiles tractés au moins en partie par un moteur électrique avec un pack de batteries, un système de climatisation et une fonction possible de charge rapide des batteries.

Le réchauffement climatique ainsi que le tarissement des sources d'énergies fossiles poussent aujourd'hui les constructeurs automobiles à investir dans le développement de véhicules moins polluants et moins consommateurs de carburants traditionnels. Ainsi, ces dernières années ont vu émerger de nouveaux véhicules fonctionnant, au moins partiellement, grâce à l'énergie électrique.

Ces véhicules, qu'ils soient totalement électriques ou bien hybrides, c'est-à-dire combinant l'utilisation d'un moteur thermique et d'un moteur électrique, nécessitent donc un approvisionnement en énergie électrique conséquent et sont équipés d'un élément de stockage d'énergie, comportant par exemple un ou plusieurs modules de batteries. Ces modules de batteries supportent mal de fonctionner en dehors d'une plage de températures déterminées. Notamment, afin d'optimiser le fonctionnement et la durée de vie de ces dernières, il convient de les maintenir à une température inférieure à 40°C.

Il est par exemple connu d'utiliser le circuit de fluide réfrigérant, par ailleurs utilisé pour chauffer ou refroidir différentes zones ou différents composants du véhicule et pour traiter thermiquement un flux d'air envoyé dans l'habitacle du véhicule équipé d'un tel circuit, pour refroidir l'élément de stockage d'énergie. Le circuit de fluide réfrigérant fournit ainsi l'énergie capable de refroidir l'élément de stockage d'énergie. Le circuit de fluide réfrigérant est ainsi dimensionné pour refroidir cet élément de stockage d'énergie pour des températures qui restent modérées. (v. EP 2 875 979 A1)

Il est également connu d'utiliser le circuit de fluide caloporteur pour refroidir les batteries, notamment lors d'une phase de charge classique de l'élément de stockage d'énergie du véhicule, à savoir une phase de charge réalisée en raccordant le véhicule pendant plusieurs heures au réseau électrique domestique. Cette technique de charge permet de maintenir la température de l'élément de stockage d'énergie en dessous d'un certain seuil, ce qui permet de se passer de tout système de refroidissement supplémentaire de l'élément de stockage d'énergie.

La tendance actuelle vise à diminuer le temps de charge des batteries. A cet effet, une nouvelle technique de charge a fait son apparition récemment, visant à charger l'élément de stockage d'énergie en un temps maximum de vingt à trente minutes. Elle consiste à charger l'élément de stockage d'énergie sous une tension et un ampérage élevés. Cette charge rapide génère un échauffement de l'élément de stockage d'énergie (plus important qu'une charge classique) qu'il convient de traiter. Par ailleurs, il faut considérer la possibilité que les occupants du véhicule restent à l'intérieur de ce dernier pendant tout ou partie du temps de charge mentionné ci-dessus. Il faut alors également traiter thermiquement l'habitacle pendant cette charge rapide, afin de maintenir des conditions de confort acceptables par les occupants, notamment quand la température extérieure au véhicule dépasse 35°C. Ces deux demandes en refroidissement impliquent un dimensionnement du système qui le rend peu compatible avec les contraintes des véhicules automobiles actuels.

Le problème technique réside donc dans la capacité simultanée à dissiper les calories générées par l'élément de stockage d'énergie pendant la charge rapide et à maintenir un niveau de refroidissement sensiblement constant dans l'habitacle, tout en limitant la consommation et/ou l'encombrement d'un système capable de remplir simultanément ces deux fonctions.

La présente invention s'inscrit dans ce contexte en offrant un module de refroidissement pour véhicules hybrides ou électriques présentant de meilleures performances thermiques en comparaison aux unités de refroidissement actuellement connues tout en limitant l'encombrement. L'invention propose notamment une solution technique qui concourt à l'atteinte de ces objectifs, c'est-à-dire maintenir l'élément de stockage d'énergie en-dessous d'une température seuil pendant une phase de charge rapide tout en maintenant par exemple les performances de traitement thermique et, notamment, de refroidissement de l'habitacle attendues par l'occupant du véhicule. L'invention propose également d'améliorer le refroidissement d'un circuit de climatisation sans générer de nuisances sonores supplémentaires, qui pourraient, par exemple, être causées par une utilisation intensive à haut régime du dispositif de ventilation et dudit circuit afin de compenser la surchauffe liée à la phase de charge rapide.

A cet effet, l'invention concerne un module de refroidissement pour véhicule automobile selon la revendication 1 comportant :
- un premier échangeur de chaleur agencé pour être relié à un premier circuit de refroidissement, notamment dédié au refroidissement de au moins un moteur électrique et de au moins un élément d'électronique de puissance,
- un deuxième échangeur de chaleur pour être relié à un deuxième circuit de refroidissement, notamment dédié au refroidissement de au moins un composant de stockage d'énergie du véhicule,
- un chemin de circulation d'air dans lequel est placé au moins partiellement les premier et deuxième échangeurs de chaleur, et
- un dispositif de ventilation agencé pour générer sélectivement, au sein du chemin de circulation d'air, un flux d'air dans :
   ∘ un premier sens, du premier échangeur vers le deuxième échangeur, et
   ∘ un deuxième sens, du deuxième échangeur vers le premier échangeur.

Ainsi, le dispositif de ventilation permet de générer un flux d'air traversant sélectivement en premier l'échangeur de chaleur le plus sollicité afin d'améliorer les performances thermiques du module de refroidissement. En effet, dans le premier sens de circulation d'air, le premier échangeur est traversé par de l'air frais alors que, dans le deuxième sens de circulation d'air, c'est le deuxième échangeur qui est traversé par de l'air frais, permettant d'améliorer sélectivement le refroidissement du premier ou deuxième échangeur en fonction des besoins de refroidissement du véhicule électrique, notamment au cours d'une phase de charge rapide.

Il est entendu par « air frais » un air qui n'a pas encore été réchauffé par l'un des premier et deuxième échangeurs de chaleur du véhicule.

Il est entendu par « élément de stockage d'énergie », un élément de stockage d'énergie électrique comme par exemple un ou plusieurs modules de batteries ou une ou plusieurs cellules d'une batterie.

Il est par ailleurs entendu par « phase de charge rapide de l'élément de stockage d'énergie » une opération d'apport extérieur d'énergie à ce dernier, réalisée par une station de charge statique délivrant, par exemple, un courant d'une intensité supérieure à environ 400 Ampères sous une tension supérieure à environ 800 Volts pendant toute la durée de la charge. Il s'agit donc d'une station de charge configurée pour réaliser une charge dite rapide, c'est-à-dire en une durée maximale de l'ordre de trente minutes environ.

On entend aussi par « traverser un échangeur de chaleur » le fait que le flux d'air est apte à traverser un faisceau d'échange de chaleur de l'échangeur de chaleur, ce faisceau d'échange de chaleur étant parcouru par un fluide apte à échanger des calories avec ce flux d'air. Par exemple, ce fluide peut être un fluide réfrigérant ou un fluide caloporteur.

Dans l'un des modes de réalisation du module de refroidissement, le dispositif de ventilation est disposé dans le chemin du circulation d'air d'un seul côté des échangeurs, notamment du côté du premier échangeur ou du côté du deuxième échangeur. L'encombrement du module complet est ainsi limité.

Selon l'un des modes de réalisation du module de refroidissement, le dispositif de ventilation du module de refroidissement comporte au moins un élément de guidage d'air agencé pour prendre sélectivement deux configurations différentes :
- une première configuration dans laquelle l'élément de guidage d'air est agencé pour générer le flux d'air dans le premier sens et,
- une deuxième configuration dans laquelle l'élément de guidage d'air est agencé pour générer le flux d'air dans le deuxième sens.

Selon l'invention, l'élément de guidage d'air est un conduit soufflant muni d'au moins une ouverture pour éjecter le flux d'air, le conduit soufflant étant agencé de façon à pouvoir prendre, dans la première configuration, une première position pour souffler le flux d'air dans le premier sens et, dans la deuxième configuration, une deuxième position pour souffler le flux d'air dans le deuxième sens. Avantageusement, le conduit soufflant est un tube à effet coanda. La suppression de l'hélice permet une réduction du volume du dispositif de ventilation, grâce au fait que les dispositifs générant la circulation d'air dans le conduit soufflant peuvent être de dimensions réduites par rapport à une hélice de ventilateur classique.

De surcroît, le dispositif de ventilation peut comprendre plusieurs conduits soufflant tels que décrit précédemment, les conduits soufflant étant positionnés en vis-à-vis de l'échangeur de chaleur et peuvent être dimensionnés pour avoir une longueur sensiblement identique à celle d'un des échangeurs. La répartition de l'air ventilé par les conduits soufflant est plus facile à contrôler et peut être rendue plus homogène sur l'ensemble du faisceau de tubes de l'échangeur, contribuant encore à l'amélioration du transfert thermique avec le fluide caloporteur ou réfrigérant circulant dans l'échangeur.

Selon l'un des modes de réalisation, le module de refroidissement comprend en outre une conduite délimitant le chemin de circulation d'air. Ladite conduite est ouverte à ses deux extrémités. Idéalement, la conduite est réalisée de manière sensiblement étanche par l'intermédiaire d'un carénage. Ledit carénage peut être formé de plusieurs parois connectées entre elles. En délimitant ainsi le chemin de circulation d'air, la conduite est partiellement étanche évitant ainsi des perturbations d'air extérieur au module de refroidissement. Ce carénage permet d'optimiser le contrôle et le guidage du flux d'air au sein du module de refroidissement, permettant notamment de limiter les phénomène de recirculation d'air dans le module.

Avantageusement, l'une des extrémités est située en face avant du véhicule.

Dans l'un des modes de réalisation du module de refroidissement, les parois de la conduite sont en matière plastique.

Dans une variante de réalisation possible du module de refroidissement, les échangeurs de chaleur et le dispositif de ventilation sont insérés au moins partiellement dans la conduite.

Selon l'un des modes de réalisation, le premier échangeur de chaleur est un radiateur connecté à un premier circuit de refroidissement capable de refroidir le au moins un moteur électrique et le au moins un élément d'électronique de puissance.

Selon l'un des modes de réalisation, le deuxième échangeur de chaleur est un condenseur, un évaporateur ou un refroidisseur de gaz connecté à un deuxième circuit de refroidissement capable de refroidir au moins l'habitacle du véhicule.

Dans un mode de réalisation avantageux :
- le premier circuit de refroidissement est capable de refroidir en outre au moins un élément de stockage d'énergie en phase de roulage du véhicule,
- le deuxième circuit de refroidissement est capable de refroidir en outre ledit au moins un élément de stockage d'énergie au cours d'une phase de roulage et/ou d'une phase de charge dudit élément de stockage d'énergie.

Typiquement, le premier circuit de refroidissement peut être configuré pour refroidir l'élément de stockage d'énergie en phase de roulage du véhicule lorsque la température extérieure est faible (par exemple inférieure à 20°C). Le deuxième circuit de refroidissement peut lui être configuré pour refroidir l'élément de stockage d'énergie en phase de roulage lorsque la température extérieure est élevée (par exemple supérieure à 20°C) ou lors d'une phase de charge de l'élément de stockage d'énergie, en particulier lors d'une phase de charge rapide.

Selon un mode de réalisation avantageux, le premier échangeur est disposé, dans le chemin d'air, en amont du deuxième échangeur par rapport audit premier sens du flux d'air, de manière à ce qu'en condition de roulage du véhicule, le flux d'air frais traverse dans un premier temps le premier échangeur et ensuite, dans un deuxième temps, le deuxième échangeur de chaleur.

En outre, lors d'une phase de charge du au moins un élément de stockage d'énergie, le dispositif de ventilation est agencé pour générer, au sein du chemin de circulation d'air, un flux d'air dans ledit deuxième sens, du deuxième échangeur vers le premier échangeur, de manière à ce qu'en condition de charge du au moins un élément de stockage d'énergie, le flux d'l'air frais traverse dans un premier temps le deuxième échangeur de chaleur et ensuite, dans un deuxième temps, le premier échangeur de chaleur.

En effet, lorsque le dispositif de ventilation est agencé de façon à générer un flux d'air dans le premier sens, le deuxième échangeur de chaleur est alimenté avec de l'air déjà partiellement réchauffé par son passage à travers le premier échangeur de chaleur, tandis que lorsque le dispositif de ventilation est agencé de façon à générer un flux d'air dans le deuxième sens, le deuxième échangeur de chaleur est directement alimenté en air frais. Ainsi, les performances thermiques du deuxième échangeur de chaleur sont meilleures lorsque le dispositif de ventilation est agencé de façon à générer un flux d'air dans le deuxième sens, que lorsque le dispositif de ventilation est agencé de façon à générer un flux d'air dans le premier sens.

Autrement dit, lorsque le véhicule est en déplacement, c'est-à-dire en phase de roulage, même à faible vitesse, le premier sens du flux d'air sera suffisant pour assurer le refroidissement des différents éléments qui en ont besoin. Lorsque le véhicule est en phase de charge rapide, couplée à l'utilisation du système de climatisation de l'habitacle, le deuxième sens du flux d'air sera sélectionné afin d'alimenter le deuxième échangeur de chaleur directement en air frais, assurant ainsi un refroidissement optimal de celui-ci et ainsi, maintenir l'élément de stockage d'énergie en dessous d'une température seuil tout en maintenant les performances de traitement thermique de l'habitacle du véhicule, même en cas de fortes chaleurs.

Selon un autre aspect, l'invention concerne également un système comprenant le module de refroidissement tel que décrit précédemment et en outre, au moins un premier circuit dans lequel est intégré le premier échangeur de chaleur et au moins un deuxième circuit dans lequel est intégré le deuxième échangeur de chaleur.

Avantageusement, le premier circuit sera traversé par un fluide caloporteur et le deuxième circuit sera traversé par un fluide réfrigérant.

Selon un mode de réalisation, le premier circuit est un circuit de type refroidissement moteur et le deuxième circuit est un circuit de type circuit de climatisation.

Avantageusement, le premier circuit comporte outre le premier échangeur, un troisième échangeur de chaleur. »

Plus avantageusement, le troisième échangeur de chaleur est un condenseur de type refroidi par eau (aussi nommé «water condenser» en anglais), en l'occurrence ici refroidi par le fluide caloporteur du premier circuit de refroidissement. Ledit troisième échangeur sera agencé dans le deuxième circuit de refroidissement de façon à refroidir le fluide réfrigérant préalablement à son entrée dans le deuxième échangeur de chaleur (appelé aussi phase de désurchauffe).

Selon une première réalisation possible, le deuxième circuit est agencé de façon à refroidir directement le au moins un élément de stockage d'énergie.

Selon une deuxième réalisation possible, le deuxième circuit est agencé de façon à refroidir indirectement le au moins un élément de stockage d'énergie par l'intermédiaire d'un quatrième échangeur de chaleur en liaison fluidique avec les premier et deuxième circuit.

Selon une troisième réalisation possible, le deuxième circuit est agencé de façon à refroidir indirectement le au moins un élément de stockage d'énergie par l'intermédiaire d'un quatrième échangeur de chaleur en liaison fluidique avec un troisième circuit de refroidissement et le deuxième circuit, le troisième circuit de refroidissement étant agencé pour refroidir le au moins un élément de stockage d'énergie. De cette manière, le quatrième échangeur de chaleur est refroidi par le liquide réfrigérant du deuxième circuit et va refroidir le troisième circuit permettant ainsi le refroidissement du au moins un élément de stockage d'énergie.

Avantageusement, le module de refroidissement peut comprendre au moins un brumisateur agencé en aval du premier et/ou deuxième échangeur de chaleur par rapport au premier ou au deuxième sens du flux d'air tel que décrit précédemment. Le brumisateur est configuré pour générer des gouttelettes d'eau et permet ainsi 'améliorer les capacités de refroidissement du flux d'air vis-à-vis des échangeurs dans au moins un des premier et deuxième sens.

En complément, le module de refroidissement peut comprendre plusieurs brumisateurs dont au moins un disposé en amont du premier échangeur de chaleur et au moins un en aval du second échangeur de chaleur par rapport au premier sens du flux d'air. On comprend que la présence d'un ou plusieurs brumisateurs permet d'alimenter les échangeurs de chaleur avec un flux d'air humide, ce qui permet d'améliorer encore les performances thermiques de ces échangeurs de chaleur.

Selon encore un autre aspect, la présente invention concerne en outre un procédé de contrôle du module de refroidissement tel que précédemment décrit, au cours duquel le premier ou le deuxième sens de flux d'air est mis en oeuvre en fonction des caractéristiques du véhicule. Ledit procédé comporte au moins les étapes suivantes :
- détection d'une phase de roulage du véhicule ou d'une phase de charge du au moins un élément de stockage d'énergie,
- lorsque la phase de roulage du véhicule est détectée, le dispositif de ventilation est agencé pour générer, au sein du chemin de circulation d'air, un flux d'air dans le premier sens, du premier échangeur vers le deuxième échangeur,
- lorsque la phase de charge du au moins un élément de stockage d'énergie est détectée, le dispositif de ventilation est agencé pour générer, au sein du chemin de circulation d'air, un flux d'air dans le deuxième sens, du deuxième échangeur vers le premier échangeur.

L'étape de détection de phase de roulage ou de charge peut notamment consister en une étape de détection d'une vitesse d'un véhicule sur lequel est intégrée le module de refroidissement, et/ou une étape de mesure d'une température d'au moins l'un des composants du module de refroidissement et/ou une étape de mesure d'un état de charge de l'élément de stockage d'énergie et/ou une étape de mesure d'une intensité et/ou d'un voltage de l'élément de stockage d'énergie, une étape de comparaison(s) des valeurs ainsi mesurées et/ou détectées avec des valeurs seuils prédéterminées et une étape de basculement de l'un vers l'autre des modes d'alimentation en air en fonction de la ou les comparaison(s) réalisée(s).

D'autres caractéristiques, détails et avantages ressortiront plus clairement à la lecture de la description détaillée donnée ci-après, à titre indicatif, en relation avec les différents exemples de réalisation illustrés sur les figures suivantes :
- la figure 1 est une vue d'ensemble d'une face avant d'un véhicule comprenant un module de refroidissement selon la présente invention ;
- la figure 2 est une vue d'ensemble schématique d'un module de refroidissement selon la présente invention en phase de roulage du véhicule ;
- la figure 3 est une vue d'ensemble schématique d'un module de refroidissement selon la présente invention en phase de charge de l'élément de stockage d'énergie du véhicule ;
- la figure 4 est une vue d'ensemble d'un exemple de réalisation du système dans lequel le module de refroidissement est intégré lors d'une phase de roulage du véhicule ;
- les figures 5, 6 et 7 sont des vues d'ensemble de différents exemples de réalisation du système dans lequel le module de refroidissement est intégré lors d'une phase de charge de l'élément de stockage d'énergie du véhicule ;
- la figure 8 est une illustration d'un dispositif de ventilation de type ventilateur rotatif ;
- la figure 9 est une illustration d'un deuxième exemple de réalisation du dispositif de ventilation de type grille de tubes soufflants.

Pour des raisons de clarté, les dimensions des différents éléments représentés sur ces figures ne sont pas en proportion avec leurs dimensions réelles. Sur les figures, des références identiques correspondent à des éléments identiques pour les différents modes de réalisation exposés.

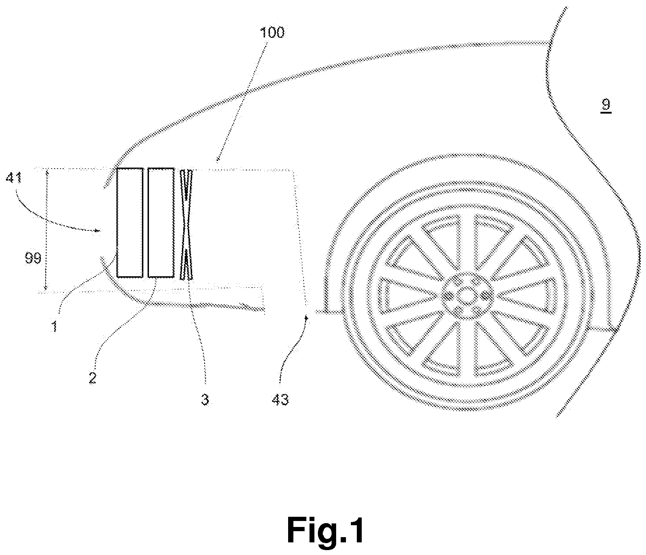

On se réfère tout d'abord à la figure 1 qui représente une vue d'ensemble d'une face avant d'un véhicule 9 comprenant un module de refroidissement 100 comprenant :
- un premier échangeur de chaleur 1,
- un deuxième échangeur de chaleur 2,
- un chemin de circulation d'air 99 dans lequel est placé au moins partiellement les premier 1 et deuxième 2 échangeurs de chaleur, et
- un dispositif de ventilation 3 agencé pour générer sélectivement, au sein du chemin de circulation d'air 99, un flux d'air FA dans un premier sens, du premier échangeur 1 vers le deuxième échangeur 2 et, dans un deuxième sens, du deuxième échangeur 2 vers le premier échangeur 1.

Le chemin de circulation d'air 99 est le parcours du flux d'air FA entre les ouvertures d'airs 41 ou 43.

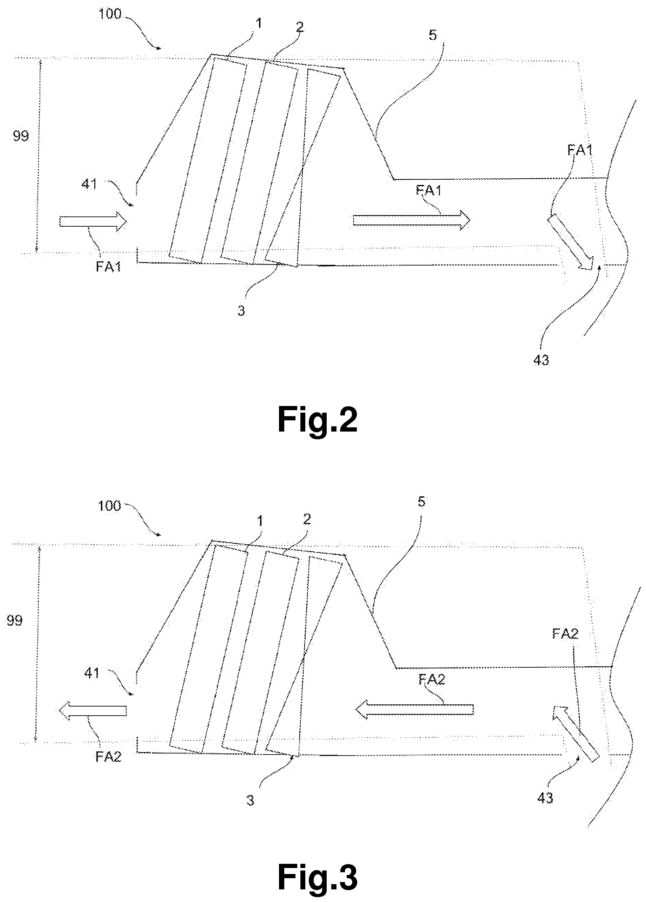

Sur la figure 2 est schématisé l'un des modes de réalisation du module de refroidissement 100 lors d'une phase de roulage du véhicule. Le dispositif de ventilation 3 est alors agencé pour générer, au sein du chemin de circulation d'air 99, un flux d'air FA dans un premier sens FA1, du premier échangeur 1 vers le deuxième échangeur 2.

Dans cet exemple de réalisation, le module de refroidissement 100, comprend en outre une conduite 5 du flux d'air FA. La conduite 5 est ouverte à ses deux extrémités, par exemple au niveau des ouvertures d'air 41 et 43. De préférence, la conduite 5 est réalisée de manière sensiblement étanche par l'intermédiaire d'un carénage (non représenté sur les figures). Le carénage peut être formé de plusieurs parois connectées entre elles. La conduite 5 délimite ainsi le chemin de circulation d'air 99. La conduite 5 peut être partiellement étanche afin d'éviter des perturbations d'air extérieur au module de refroidissement. La conduite 5, formée par le carénage, permet d'optimiser le contrôle et le guidage du flux d'air FA au sein du module de refroidissement 100, permettant notamment de limiter les phénomène de recirculation d'air dans le module 100. Les parois de la conduite 5 peuvent être de matière plastique.

Comme représenté sur la figure 2 avec l'ouverture d'air 41, l'une des extrémités de la conduite 5 peut être située en face avant du véhicule 9.

En outre, les premier et deuxième échangeurs de chaleur 1 et 2 et le dispositif de ventilation 3 sont insérés au moins partiellement dans la conduite 5.

Sur la figure 3 est schématisé l'un des modes de réalisation du module de refroidissement 100 lors d'une phase de charge. Le dispositif de ventilation 3 est alors agencé pour générer, au sein du chemin de circulation d'air 99, un flux d'air FA, dans un deuxième sens FA2, du deuxième échangeur 2 vers le premier échangeur 1.

Les figures 2 et 3 montrent bien que lorsque le dispositif de ventilation 3 est agencé de façon à générer :
- un flux d'air dans le premier sens FA1, le deuxième échangeur de chaleur 2 est alimenté avec de l'air déjà partiellement réchauffé par son passage à travers le premier échangeur de chaleur 1, ou
- un flux d'air dans le deuxième sens FA2, le deuxième échangeur de chaleur 2 étant alors directement alimenté en air frais.

Ainsi, les performances thermiques du deuxième échangeur de chaleur 2 sont meilleures lorsque le dispositif de ventilation 3 est agencé de façon à générer un flux d'air dans le deuxième sens FA2, que lorsque le dispositif de ventilation 3 est agencé de façon à générer un flux d'air dans le premier sens FA1.

De cette manière, lorsque le véhicule 9 est en déplacement, c'est-à-dire en phase de roulage, même à faible vitesse, le premier sens du flux d'air FA1 sera suffisant pour assurer le refroidissement des différents éléments qui en ont besoin. Lorsque le véhicule 9 est en phase de charge rapide, couplée à l'utilisation du système de climatisation de l'habitacle, le deuxième sens du flux d'air FA2 sera sélectionné afin d'alimenter le deuxième échangeur de chaleur 2 directement en air frais, assurant ainsi un refroidissement optimal de celui-ci.

De plus, le dispositif de ventilation 3 peut être disposé dans le chemin du circulation d'air 99 d'un seul côté des échangeurs 1 et 2, notamment du côté du premier échangeur 1 ou du côté du deuxième échangeur 2.

Le dispositif de ventilation 3 comporte au moins un élément de guidage d'air agencé pour pendre sélectivement deux configurations différentes :
- une première configuration, dans laquelle l'élément de guidage d'air est agencé pour générer le flux d'air dans le premier sens FA1 et,
- une deuxième configuration, dans laquelle l'élément de guidage d'air est agencé pour générer le flux d'air dans le deuxième sens FA2.

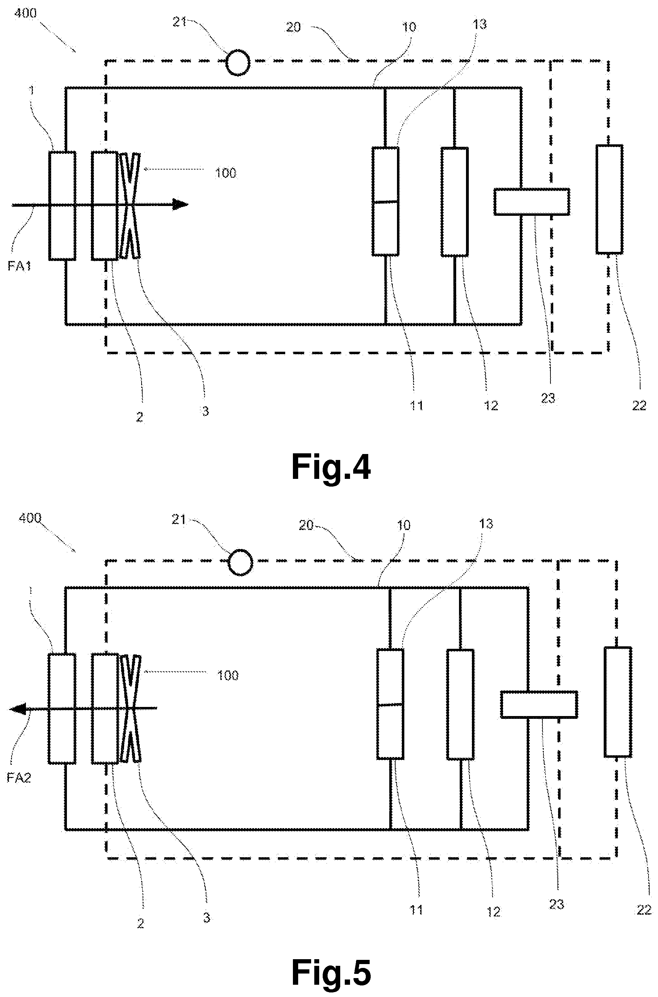

En référence à la figure 4, représentant une vue d'ensemble d'un exemple de réalisation d'un système 400, dans lequel est intégré le module de refroidissement 100. Dans cet exemple, le véhicule 9 est considéré comme étant en phase de roulage.

En condition de roulage, le flux d'air frais dans le premier sens FA1 traverse dans un premier temps le premier échangeur 1 qui pourrait notamment être un radiateur basse température, refroidissant un premier circuit de fluide caloporteur 10 alimentant deux fonctions en parallèles :
- le refroidissement direct d'au moins un moteur électrique 11 et de l'électronique de puissance 13, ces fonctions nécessitant que le fluide caloporteur soit à une température inférieure à 55°C,
- le refroidissement direct du au moins un élément de stockage d'énergie 12 par le fluide caloporteur à faible température notamment lorsque la température extérieure est faible (inférieure à 20°C).

Il est entendu par « élément de stockage d'énergie », un élément de stockage d'énergie électrique comme par exemple un ou plusieurs modules de batteries ou une ou plusieurs cellules d'une batterie.

Dans un second temps, le flux d'air frais FA1 traverse le deuxième échangeur de chaleur 2 dont le rôle est de refroidir le deuxième circuit de refroidissement 20 qui est, en l'occurrence, un circuit de climatisation. Aussi, de manière connu en soi, le deuxième circuit de refroidissement comporte alors au moins un compresseur 21 et un évaporateur 22.

Le deuxième circuit de refroidissement 20 a deux fonctions :
- le refroidissement du flux d'air envoyé dans l'habitacle (par l'intermédiaire de l'évaporateur 22),
- le refroidissement indirecte de l'au moins un élément de stockage d'énergie 12 via, par exemple, un quatrième échangeur de chaleur 23 entre le fluide réfrigérant et un circuit de fluide caloporteur (par exemple, le circuit de refroidissement 10), le circuit de fluide caloporteur étant en échange direct avec le au moins un élément de stockage d'énergie 12.

Lorsque le véhicule 9 est en phase de roulage, le premier sens du flux d'air FA1 sera sélectionné afin d'alimenter le premier échangeur de chaleur 1 directement en air frais, assurant ainsi un refroidissement optimal du premier circuit de refroidissement 10, permettant ainsi de maintenir le moteur électrique 11, l'élément de stockage 12 et l'électronique de puissance 13 à une température de fonctionnement adaptée, ces éléments étant les plus sollicités en phase de roulage et requièrent donc un refroidissement plus important.

En référence à la figure 5, représentant une vue d'ensemble d'un premier exemple de réalisation du système 400, dans lequel le module de refroidissement 100 est intégré, lors d'une phase de charge de l'élément de stockage d'énergie 12 du véhicule.

Lorsque le véhicule 9 est en phase de charge rapide, couplée à l'utilisation du système de climatisation de l'habitacle, le deuxième sens du flux d'air FA2 sera sélectionné afin d'alimenter le deuxième échangeur de chaleur 2 directement en air frais, assurant ainsi un refroidissement optimal du deuxième circuit de refroidissement 20, permettant alors de maintenir l'élément de stockage d'énergie 12 en dessous d'une température seuil tout en maintenant les performances de traitement thermique de l'habitacle du véhicule, même en cas de fortes chaleurs.

Lors de la phase de charge, le au moins un moteur électrique 11 ainsi que l'électronique de puissance 13 étant moins sollicité, le fait que le flux d'air FA2 soit réchauffé par le deuxième échangeur de chaleur 2 n'a pas d'impact sur le bon fonctionnement du véhicule.

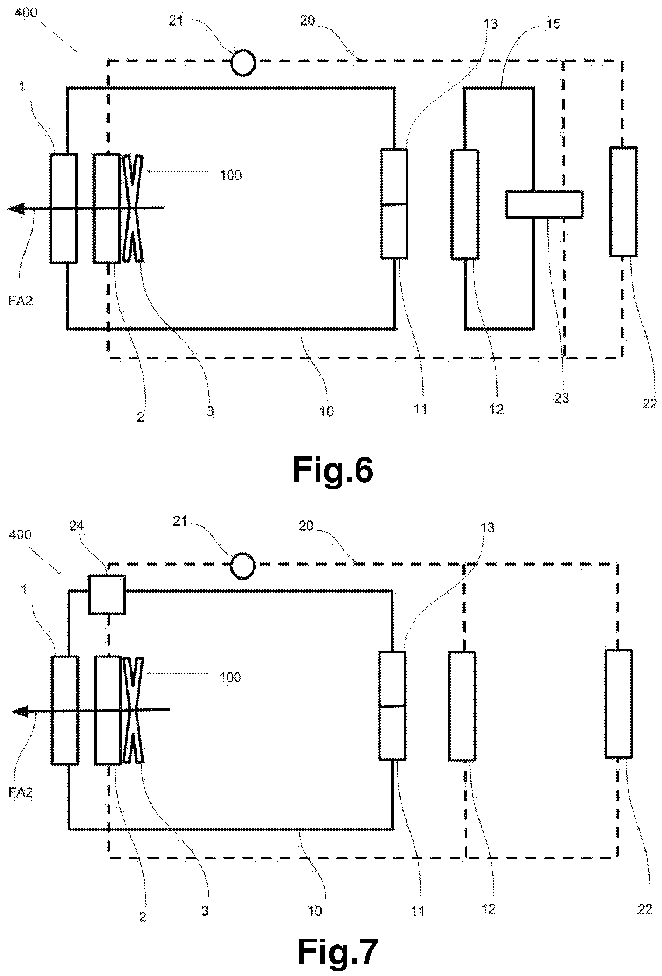

En référence à la figure 6, représentant une vue d'ensemble d'un deuxième exemple de réalisation du système 400, dans lequel le module de refroidissement 100 est intégré, lors d'une phase de charge de l'élément de stockage d'énergie 12 du véhicule.

Lorsque le véhicule 9 est en phase de charge rapide, couplée à l'utilisation du système de climatisation de l'habitacle, le deuxième sens du flux d'air FA2 sera sélectionné afin d'alimenter le deuxième échangeur de chaleur 2 directement en air frais, assurant ainsi un refroidissement optimal du deuxième circuit de refroidissement 20.

De plus, le circuit de refroidissement 10 comprend en outre au moins deux valves (non représentées sur les figures) permettant une isolation d'une partie du circuit de refroidissement 10, créant ainsi un troisième circuit de refroidissement 15. Ainsi, le refroidissement du deuxième circuit de refroidissement 20 va permettre le refroidissement du troisième circuit 15 par l'intermédiaire du quatrième échangeur 23 permettant ainsi de maintenir l'élément de stockage d'énergie 12 en dessous d'une température seuil tout en maintenant les performances de traitement thermique de l'habitacle du véhicule, même en cas de fortes chaleurs.

En référence à la figure 7, représentant une vue d'ensemble d'un troisième exemple de réalisation du système 400, dans lequel le module de refroidissement 100 est intégré, lors d'une phase de charge de l'élément de stockage d'énergie 12 du véhicule.

Lorsque le véhicule 9 est en phase de charge rapide, couplée à l'utilisation du système de climatisation de l'habitacle, le deuxième sens du flux d'air FA2 sera sélectionné afin d'alimenter le deuxième échangeur de chaleur 2 directement en air frais, assurant ainsi un refroidissement optimal du deuxième circuit de refroidissement 20.

De plus, le premier circuit 10 comprend en outre un troisième échangeur de chaleur 24 étant préférentiellement un condenseur de type refroidi par eau (aussi nommé «water condenser» en anglais), en l'occurrence ici refroidi par le fluide caloporteur du premier circuit de refroidissement 10. Ledit troisième échangeur de chaleur 24 est agencé dans le deuxième circuit de refroidissement 20 de façon à refroidir le fluide réfrigérant préalablement à son entrée dans le deuxième échangeur de chaleur 2 (appelé aussi phase de désurchauffe). Ledit troisième échangeur de chaleur 24 peut également être intégré en amont du deuxième échangeur de chaleur 2 dans l'un quelconque des modes de réalisation illustrés aux figures 4 à 6.

Dans cet exemple de réalisation, le deuxième circuit 20 vient refroidir directement le au moins un élément de stockage d'énergie 12.

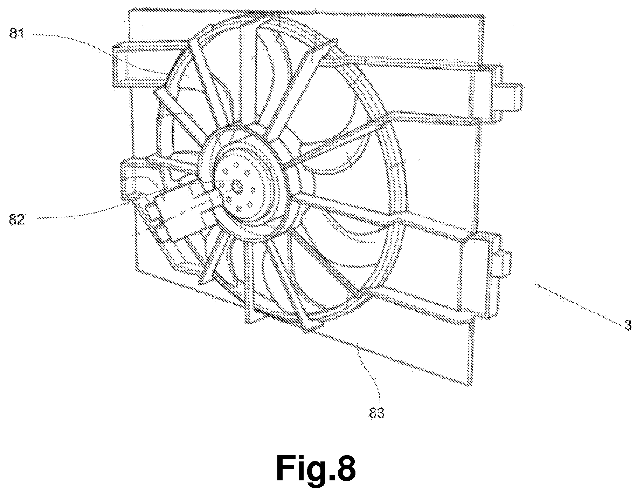

En référence à la figure 8, représentant une illustration de réalisation du dispositif de ventilation 3 de type ventilateur rotatif.

Dans cet exemple de réalisation, le dispositif de ventilation 3 comporte un unique moteur électrique 82, moteur qui lorsqu'il est actionné permet de générer, lors d'une phase de roulage, un flux d'air selon le premier sens FA1 ou, lors d'une phase de charge, un flux d'air selon le deuxième sens FA2 de circulation d'air.

Le moteur électrique 82 du dispositif de ventilation 3 est un moteur réversible, par exemple de type sans balais (« brushless » en langue anglaise), permettant d'actionner l'élément de guidage de l'air 81. Ledit élément de guidage de l'air 81 est au moins une pale du ventilateur rotatif permettant, de par sa conformation, de générer un flux d'air dans le premier sens FA1 lorsque le moteur électrique 82 tourne dans un premier sens de rotation, et un flux d'air dans le deuxième sens FA2 lorsque le moteur électrique 82 tourne dans son second sens de rotation.

Le dispositif de ventilation 3 peut comporter en outre une buse 83 comprenant une ouverture dans laquelle est logé le ventilateur rotatif. Cette buse 83 permet notamment de former support du ventilateur rotatif et de fixer ce ventilateur dans le module de refroidissement 100, par exemple via une fixation sur le premier 1 ou le deuxième 2 échangeur de chaleur, ou encore sur la conduite 5.

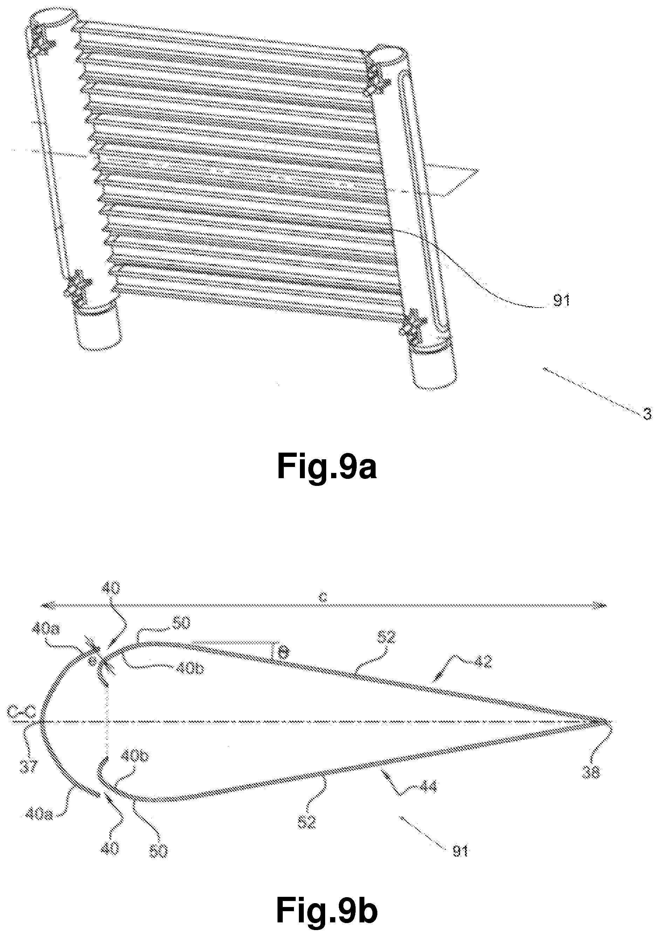

En référence aux figures 9a et 9b, représentant une illustration du dispositif de ventilation 3 de type grille de tubes soufflants.

Selon ce deuxième exemple de réalisation, l'élément de guidage d'air est un conduit 91 soufflant muni d'au moins une ouverture 40 pour éjecter le flux d'air FA, le conduit soufflant 91 étant agencé de façon à pouvoir prendre, dans la première configuration, une première position pour souffler le flux d'air dans le premier sens FA1 et, dans la deuxième configuration, une deuxième position pour souffler le flux d'air dans le deuxième sens FA2. Avantageusement, le conduit soufflant 91 est un tube à effet Coanda. La suppression de l'hélice permet une réduction du volume du dispositif de ventilation, grâce au fait que les dispositifs générant la circulation d'air dans le conduit soufflant 91 peuvent être de dimensions réduites par rapport à une hélice de ventilateur classique.

Le dispositif de ventilation 3 peut comprendre plusieurs conduits soufflant 91 tels que décrit précédemment, les conduits soufflant étant positionnés en vis-à-vis de l'un des échangeurs de chaleur 1 ou 2 et peuvent être dimensionnés pour avoir une longueur sensiblement identique à celle d'un des échangeurs de chaleur 1 ou 2. La répartition de l'air ventilé par les conduits soufflant 91 est plus facile à contrôler et peut être rendue plus homogène sur l'ensemble du faisceau de tubes des échangeurs de chaleur 1 et 2, contribuant encore à l'amélioration du transfert thermique avec le fluide caloporteur ou réfrigérant circulant dans les échangeurs.

Chacun des conduits soufflants 91 est destiné à être mis en communication de fluide avec une ou plusieurs turbomachines d'alimentation en flux d'air. A cet effet, le dispositif de ventilation peut comporter en outre un collecteur d'air configuré pour être en communication fluidique avec la turbomachine d'une part, et avec chacun des conduits soufflants 91 d'autre part. afin de les alimenter en flux d'air.

Les conduits soufflants 91 peuvent en outre être sensiblement rectilignes, parallèles entre eux et alignés de manière à former une rangée de conduits soufflants.

Chaque conduit peut être formé par l'intermédiaire d'un premier et deuxième profil 42, 44 de chaque conduit soufflant 41 qui sont ici symétriques par rapport à un plan C-C, ou plan de corde, passant par le bord d'attaque 37 et le bord de fuite 38 du conduit 91.

Chacun des profils 42, 44 peut être muni de l'ouverture 40. Ainsi, au moins une première ouverture 40 est réalisée sur le premier profil 42, qui est configurée pour qu'un flux d'air sortant de la première ouverture 40 s'écoule le long d'au moins une partie du premier profil 42. De même, au moins une deuxième ouverture 40 est présente sur le deuxième profil 44, qui est configurée pour qu'un flux d'air sortant de la deuxième ouverture 40 s'écoule le long d'au moins une partie du deuxième profil 44. Ceci peut être réalisé ici en mettant en oeuvre l'effet Coanda.

La distance c entre le bord d'attaque 37 et le bord de fuite 38 peut être supérieure ou égale à 50 mm et/ou inférieure ou égale à 80 mm. Notamment la longueur c peut être égale à 60 mm.

Les ouvertures 40 sont analogues à celles du premier exemple décrit. Notamment, la distance e séparant les lèvres interne 40b et externe 40a de chaque ouverture 40 peut être supérieure ou égale à 0,3 mm, de préférence supérieure ou égale à 0,5 mm, de préférence encore supérieure ou égale à 0,7 mm, et/ou inférieure ou égale à 2 mm, de préférence inférieure ou égale à 1,5 mm, de préférence encore inférieure ou égale à 0,9 mm et de manière préférée encore inférieure ou égale à 0,7 mm.

Le fait que les profils 42, 44 soient symétriques par rapport au plan de corde C-C passant par le bord d'attaque 37 et le bord de fuite 38 du tube aérodynamique 8 permet de limiter l'obstruction au flux d'air à travers le dispositif de ventilation 3, tout en créant davantage de passages d'air actifs dans le volume disponible devant le premier ou le deuxième échangeur. En outre, la symétrie des profils 42, 44 permet d'avoir une éjection d'air le long de chaque côté des conduits soufflants 91.

En aval de la partie bombée 50 dans le sens d'éjection dudit flux d'air par l'ouverture 40, les premier et deuxième profils 42, 44 du conduit soufflant 91 comporte une première partie 52 sensiblement rectiligne.

L'invention a été décrite en référence à des modes de réalisations particuliers qui ne sont pas limitatifs.

## Revendications

1. Module de refroidissement (100) pour véhicule automobile (9) comportant :
- un premier échangeur de chaleur (1) agencé pour être relié à un premier circuit de refroidissement (10),
- un deuxième échangeur de chaleur (2) agencé pour être relié à un deuxième circuit de refroidissement (20),
- un chemin de circulation d'air (99) dans lequel est placé au moins partiellement les premier (1) et deuxième échangeurs de chaleur (2), et
- un dispositif de ventilation (3) agencé pour générer sélectivement, au sein du chemin de circulation d'air (99), un flux d'air (FA) :
∘ dans un premier sens (FA1), du premier échangeur vers le deuxième échangeur, et
∘ dans un deuxième sens (FA2), du deuxième échangeur vers le premier échangeur,
le dispositif de ventilation (3) comportant au moins un élément de guidage d'air (81;91) agencé pour pendre sélectivement deux configurations différentes :
- une première configuration, dans laquelle l'élément de guidage d'air (81;91) est agencé pour générer le flux d'air dans le premier sens (FA1) et
- une deuxième configuration, dans laquelle l'élément de guidage d'air est agencé pour générer le flux d'air dans le deuxième sens (FA2),
l'élément de guidage de l'air (81;91) étant au moins un conduit soufflant (91) muni d'au moins une ouverture (40) pour éjecter le flux d'air (FA), le conduit soufflant (91) étant agencé de façon à pouvoir prendre, dans la première configuration, une première position pour souffler le flux d'air dans le premier sens (FA1) et, dans la deuxième configuration, une deuxième position pour souffler le flux d'air dans le deuxième sens (FA2).

2. Module de refroidissement (100) selon l'une des revendications précédentes, comprenant en outre une conduite (5) délimitant le chemin de circulation d'air (99).

3. Module de refroidissement (100) selon l'une quelconque des revendications précédentes, dans lequel :
- le premier échangeur de chaleur (1) est un radiateur connecté à un premier circuit de refroidissement (10) capable de refroidir au moins un moteur électrique (11) et au moins un élément d'électronique de puissance (13) et,
- le deuxième échangeur de chaleur (2) est un condenseur, un évaporateur ou un refroidisseur de gaz connecté à un deuxième circuit de refroidissement (20) capable de refroidir au moins l'habitacle du véhicule et en outre, au cours d'une phase de charge d'un élément de stockage d'énergie (12) du véhicule, ledit au moins un élément de stockage d'énergie (12).

4. Module de refroidissement (100) selon la revendication précédente, dans lequel :
- le premier échangeur de chaleur (1) est disposé, dans le chemin d'air (99), en amont du deuxième échangeur de chaleur (2) par rapport audit premier sens du flux d'air (FA1), de manière à ce qu'en condition de roulage du véhicule (9) le flux d'air (FA) traverse dans un premier temps le premier échangeur de chaleur (1) et ensuite, dans un deuxième temps, le deuxième échangeur de chaleur (2), et
- lors d'une phase de charge du au moins un élément de stockage d'énergie (12), le dispositif de ventilation (3) est agencé pour générer, au sein du chemin de circulation d'air (99), un flux d'air dans ledit deuxième sens (FA2), du deuxième échangeur de chaleur (2) vers le premier échangeur de chaleur (1).

5. Système (400) comportant au moins un module de refroidissement (100) selon l'une des revendications précédentes, le système (400) comprenant en outre, au moins un premier circuit de refroidissement (10) dans lequel est intégré le premier échangeur de chaleur (1) et au moins un deuxième circuit de refroidissement (20) dans lequel est intégré le deuxième échangeur de chaleur (2).

6. Procédé de contrôle du module de refroidissement (100) selon l'une des revendications précédentes, comportant au moins les étapes suivantes :
- détection d'une phase de roulage du véhicule ou d'une phase de charge du au moins un élément de stockage d'énergie (12),
- lorsque la phase de roulage du véhicule est détectée, le dispositif de ventilation (3) est agencé pour générer, au sein du chemin de circulation d'air (99), un flux d'air dans le premier sens (FA1), du premier échangeur de chaleur (1) vers le deuxième échangeur de chaleur (2), et
- lorsque la phase de charge du au moins un élément de stockage d'énergie (12) est détectée, le dispositif de ventilation (3) est agencé pour générer, au sein du chemin de circulation d'air (99), un flux d'air dans le deuxième sens (FA2), du deuxième échangeur de chaleur (2) vers le premier échangeur de chaleur (1).

## Patentansprüche

1. Kühlmodul (100) für ein Kraftfahrzeug (9), umfassend:
- einen ersten Wärmetauscher (1), der dazu eingerichtet ist, mit einem ersten Kühlkreislauf (10) verbunden zu werden,
- einen zweiten Wärmetauscher (2), der dazu eingerichtet ist, mit einem zweiten Kühlkreislauf (20) verbunden zu werden,
- einen Luftzirkulationspfad (99), in dem mindestens teilweise der erste (1) und der zweite Wärmetauscher (2) angeordnet sind, und
- eine Lüftungsvorrichtung (3), die dazu eingerichtet ist, in dem Luftzirkulationspfad (99) selektiv einen Luftstrom (FA) zu erzeugen:
o in eine erste Richtung (FA1), von dem ersten Tauscher zu dem zweiten Tauscher, und
o in eine zweite Richtung (FA2), von dem zweiten Tauscher zu dem ersten Tauscher,
wobei die Lüftungsvorrichtung (3) mindestens ein Luftleitelement (81;91) umfasst, das dazu eingerichtet ist, selektiv zwei verschiedene Konfigurationen anzunehmen:
- eine erste Konfiguration, in der das Luftleitelement (81;91) dazu eingerichtet ist, den Luftstrom in die erste Richtung (FA1) zu erzeugen, und
- eine zweite Konfiguration, in der das Luftleitelement dazu eingerichtet ist, den Luftstrom in die zweite Richtung (FA2) zu erzeugen,
wobei das Luftleitelement (81;91) mindestens ein Blaskanal (91) ist, der mit mindestens einer Öffnung (40) zum Ausstoßen des Luftstroms (FA) versehen ist, wobei der Blaskanal (91) so eingerichtet ist, dass er in der ersten Konfiguration eine erste Stellung einnehmen kann, um den Luftstrom in die erste Richtung (FA1) zu blasen, und in der zweiten Konfiguration eine zweite Stellung, um den Luftstrom in die zweite Richtung (FA2) zu blasen.

2. Kühlmodul (100) nach einem der vorhergehenden Ansprüche, das ferner eine Leitung (5) aufweist, die den Luftzirkulationspfad (99) begrenzt.

3. Kühlmodul (100) nach einem der vorhergehenden Ansprüche, wobei:
- der erste Wärmetauscher (1) ein Kühler ist, der an einen ersten Kühlkreislauf (10) angeschlossen ist, der in der Lage ist, mindestens einen Elektromotor (11) und mindestens ein Leistungselektronikelement (13) zu kühlen, und
- der zweite Wärmetauscher (2) ein Kondensator, ein Verdampfer oder ein Gaskühler ist, der an einen zweiten Kühlkreislauf (20) angeschlossen ist, der in der Lage ist, mindestens den Innenraum des Fahrzeugs und ferner, während einer Ladephase eines Energiespeicherelements (12) des Fahrzeugs, das mindestens eine Energiespeicherelement (12) zu kühlen.

4. Kühlmodul (100) nach dem vorhergehenden Anspruch, wobei:
- der erste Wärmetauscher (1) in dem Luftpfad (99) stromauf des zweiten Wärmetauschers (2) bezogen auf die erste Richtung des Luftstroms (FA1) angeordnet ist, so dass unter Fahrbedingungen des Fahrzeugs (9) der Luftstrom (FA) zuerst den ersten Wärmetauscher (1) und anschließend danach den zweiten Wärmetauscher (2) durchquert, und
- bei einer Ladephase des mindestens einen Energiespeicherelements (12) die Lüftungsvorrichtung (3) dazu eingerichtet ist, in dem Luftzirkulationspfad (99) einen Luftstrom in die zweite Richtung (FA2), von dem zweiten Wärmetauscher (2) zu dem ersten Wärmetauscher (1), zu erzeugen.

5. System (400), das mindestens ein Kühlmodul (100) nach einem der vorhergehenden Ansprüche umfasst, wobei das System (400) ferner mindestens einen ersten Kühlkreislauf (10), in den der erste Wärmetauscher (1) integriert ist, und mindestens einen zweiten Kühlkreislauf (20), in den der zweite Wärmetauscher (2) integriert ist, aufweist.

6. Verfahren zur Steuerung des Kühlmoduls (100) nach einem der vorhergehenden Ansprüche, umfassend mindestens die folgenden Schritte:
- Detektieren einer Fahrphase des Fahrzeugs oder einer Ladephase des mindestens einen Energiespeicherelements (12),
- wenn die Fahrphase des Fahrzeugs detektiert wird, ist die Lüftungsvorrichtung (3) dazu eingerichtet, in dem Luftzirkulationspfad (99) einen Luftstrom in die erste Richtung (FA1), von dem ersten Wärmetauscher (1) zu dem zweiten Wärmetauscher (2), zu erzeugen, und
- wenn die Ladephase des mindestens einen Energiespeicherelements (12) detektiert wird, ist die Lüftungsvorrichtung (3) dazu eingerichtet, in dem Luftzirkulationspfad (99) einen Luftstrom in die zweite Richtung (FA2), von dem zweiten Wärmetauscher (2) zu dem ersten Wärmetauscher (1), zu erzeugen.

## Claims

1. Cooling module (100) for a motor vehicle (9), comprising:
- a first heat exchanger (1) arranged to be connected to a first cooling circuit (10),
- a second heat exchanger (2) arranged to be connected to a second cooling circuit (20),
- an air circulation path (99) in which the first (1) and second heat exchangers (2) are at least partially placed, and
- a ventilation device (3) arranged to selectively generate, within the air circulation path (99), an air flow (FA):
o in a first direction (FA1), from the first exchanger towards the second exchanger, and
o in a second direction (FA2), from the second exchanger towards the first exchanger,
the ventilation device (3) comprising at least one air guidance element (81; 91) arranged to selectively assume two different configurations:
- a first configuration, in which the air guidance element (81; 91) is arranged to generate the air flow in the first direction (FA1) and
- a second configuration, in which the air guidance element is arranged to generate the air flow in the second direction (FA2),
the air guidance element (81; 91) being at least one blowing pipe (91) provided with at least one opening (40) for ejecting the air flow (FA), the blowing pipe (91) being arranged so as to be able to assume, in the first configuration, a first position for blowing the air flow in the first direction (FA1) and, in the second configuration, a second position for blowing the air flow in the second direction (FA2).

2. Cooling module (100) according to one of the preceding claims, further comprising a duct (5) delimiting the air circulation path (99).

3. Cooling module (100) according to either one of the preceding claims, wherein:
- the first heat exchanger (1) is a radiator connected to a first cooling circuit (10) capable of cooling at least one electric motor (11) and at least one power electronics element (13) and,
- the second heat exchanger (2) is a condenser, an evaporator or a gas cooler connected to a second cooling circuit (20) capable of cooling at least the passenger compartment of the vehicle and also, during a charging phase of an energy storage element (12) of the vehicle, said at least one energy storage element (12).

4. Cooling module (100) according to the preceding claim, wherein:
- the first heat exchanger (1) is disposed, in the air path (99), upstream of the second heat exchanger (2) relative to said first direction of the air flow (FA1), such that when the vehicle (9) is under running conditions the air flow (FA) passes firstly through the first heat exchanger (1) and then, secondly, the second heat exchanger (2), and
- during a charging phase of the at least one energy storage element (12), the ventilation device (3) is arranged to generate, within the air circulation path (99), an air flow in said second direction (FA2), from the second heat exchanger (2) towards the first heat exchanger (1).

5. System (400) comprising at least one cooling module (100) according to one of the preceding claims, the system (400) further comprising at least one first cooling circuit (10) in which the first heat exchanger (1) is integrated and at least one second cooling circuit (20) in which the second heat exchanger (2) is integrated.

6. Method for controlling the cooling module (100) according to one of the preceding claims, comprising at least the following steps:
- detecting a running phase of the vehicle or a charging phase of the at least one energy storage element (12),
- when the running phase of the vehicle is detected, the ventilation device (3) is arranged to generate, within the air circulation path (99), an air flow in the first direction (FA1), from the first heat exchanger (1) towards the second heat exchanger (2), and
- when the charging phase of the at least one energy storage element (12) is detected, the ventilation device (3) is arranged to generate, within the air circulation path (99), an air flow in the second direction (FA2), from the second heat exchanger (2) towards the first heat exchanger (1).
